(19) **Europäisches Patentamt / European Patent Office / Office européen des brevets**

(11) **EP 4 180 159 A1**

(12) # EUROPEAN PATENT APPLICATION
published in accordance with Art. 153(4) EPC

(43) Date of publication:
17.05.2023 Bulletin 2023/20

(21) Application number: 21838873.4

(22) Date of filing: 08.07.2021

(51) International Patent Classification (IPC):
**B23H 7/10** (2006.01)     **B23H 7/02** (2006.01)

(52) Cooperative Patent Classification (CPC):
**B23H 7/02; B23H 7/10**

(86) International application number:
**PCT/JP2021/025787**

(87) International publication number:
**WO 2022/009951 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 09.07.2020   JP 2020118467

(71) Applicant: **FANUC CORPORATION
Oshino-mura
Minamitsuru-gun
Yamanashi 401-0597 (JP)**

(72) Inventor: **NISHIKAWA, Ryo
Minamitsuru-gun, Yamanashi 401-0597 (JP)**

(74) Representative: **Keil & Schaafhausen
Patentanwälte PartGmbB
Friedrichstraße 2-6
60323 Frankfurt am Main (DE)**

(54) **TENSION INFORMATION ACQUISITION DEVICE, WIRE ELECTRICAL DISCHARGE MACHINE, AND TENSION INFORMATION ACQUISITION METHOD**

(57)     A tension information acquisition device (18) acquires tension (FT) of a wire electrode (12) and is provided with: a back tension adjustment unit (56) that makes the magnitude of back tension (FBT) of the wire electrode (12) zero; and an acquisition unit (58) that acquires tension information indicating the tension (FT) on the basis of a disturbance estimate value (VD) or output torque of a feed motor (42A) when the magnitude of the back tension (FBT) is zero.

FIG. 3

EP 4 180 159 A1

## Description

TECHNICAL FIELD

The present invention relates to a tension information acquisition device, a wire electrical discharge machine, and a tension information acquisition method.

BACKGROUND ART

A wire electrical discharge machine is generally equipped with a tension sensor that detects the tension of a wire electrode. As an example of such a tension sensor, for example, a "wire electrode tension sensor" is disclosed in JP 2002-340711 A.

SUMMARY OF THE INVENTION

In a general wire electrical discharge machine, the tension of a wire electrode is detected by a tension sensor attached to the wire electrode. In the wire electrical discharge machine, feed control of the wire electrode is performed based on the tension detected by the tension sensor.

Here, if information indicating the tension of the wire electrode (hereinafter referred to as "tension information") can be acquired without the tension sensor, it would be possible to omit the tension sensor from the configuration of the wire electrical discharge machine. Further, if the tension sensor could be omitted from the configuration of the wire electrical discharge machine, it would be advantageous for simplifying the mechanical structure of the wire electrical discharge machine and for reducing the cost of constituent components.

An object of the present invention is to provide a tension information acquisition device, a wire electrical discharge machine, and a tension information acquisition method that enable acquisition of tension information indicating the tension of a wire electrode on the basis of information obtained from an actuator serving to feed the wire electrode, the actuator being included in the wire electrical discharge machine.

According to a first aspect of the present invention, there is provided a tension information acquisition device configured to acquire tension information indicating a tension of a wire electrode of a wire electrical discharge machine, wherein the wire electrical discharge machine includes: a wire bobbin around which the wire electrode is wound; a feed roller configured to feed the wire electrode reeled out from the wire bobbin, in a feeding direction by rotation of the feed roller; a feed motor configured to control the rotation of the feed roller; and a torque motor configured to generate, on the wire electrode, a back tension in a direction opposite to the feeding direction by controlling a rotational torque applied to the wire bobbin, the tension information acquisition device including: a back tension adjustment unit configured to control the torque motor to thereby reduce the rotational torque until a magnitude of the back tension of the wire electrode becomes zero; and an acquisition unit configured to acquire the tension information indicating the tension of the wire electrode, based on an estimated disturbance value of the feed motor or an output torque thereof, obtained when the magnitude of the back tension is zero.

According to a second aspect of the present invention, there is provided a wire electrical discharge machine including the tension information acquisition device according to the first aspect.

According to a third aspect of the present information, there is provided a tension information acquisition method for acquiring tension information indicating a tension of a wire electrode of a wire electrical discharge machine, wherein the wire electrical discharge machine includes: a wire bobbin around which the wire electrode is wound; a feed roller configured to feed the wire electrode reeled out from the wire bobbin, in a feeding direction by rotation of the feed roller; a feed motor configured to control the rotation of the feed roller; and a torque motor configured to generate, on the wire electrode, a back tension in a direction opposite to the feeding direction by controlling a rotational torque applied to the wire bobbin, the tension information acquisition method including: a back tension adjustment step of reducing the rotational torque of the torque motor until a magnitude of the back tension of the wire electrode becomes zero; and an acquisition step of acquiring the tension information indicating the tension of the wire electrode, based on an estimated disturbance value of the feed motor or an output torque thereof, obtained when the magnitude of the back tension is zero.

According to the present invention, it is possible to provide a tension information acquisition device, a wire electrical discharge machine, and a tension information acquisition method that enable acquisition of tension information indicating the tension of a wire electrode based on information obtained from an actuator for feeding the wire electrode, the actuator being included in the wire electrical discharge machine.

BRIEF DESCRIPTION OF DRAWINGS

FIG. 1 is an overall configuration diagram of a wire electrical discharge machine according to an embodiment;

FIG. 2 is a configuration diagram of a feed mechanism;

FIG. 3 is a configuration diagram of a tension information acquisition device;

FIG. 4 is a flowchart illustrating a process flow of a tension information acquisition method according to an embodiment;

FIG. 5 is a configuration diagram of a feed mechanism according to a first modification;

FIG. 6A is a diagram schematically illustrating a wire electrode and a cushion roller when the magnitude of a back tension is not zero;

FIG. 6B is a diagram schematically illustrating the wire electrode and the cushion roller when the magnitude of the back tension is zero;

FIG. 7 is a diagram showing an example in which the arrangement of the cushion roller shown in FIG. 5 is changed; and

FIG. 8 is a configuration diagram of a feed mechanism according to a third modification.

DETAILED DESCRIPTION OF THE INVENTION

A preferred embodiment of a tension information acquisition device, a wire electrical discharge machine, and a tension information acquisition method according to the present invention will be described in detail below with reference to the accompanying drawings.

[Embodiment]

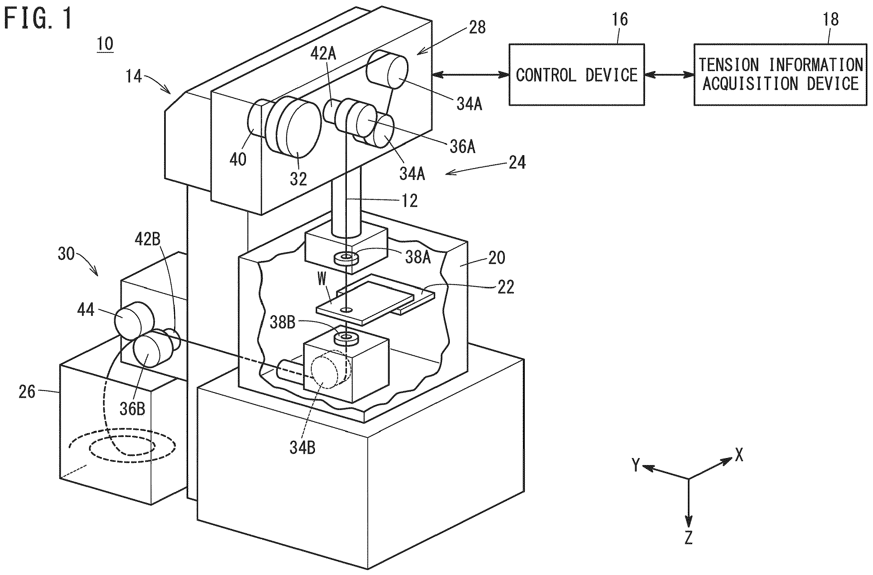

FIG. 1 is an overall configuration diagram of a wire electrical discharge machine 10 according to an embodiment.

First, the directional axes shown in FIG. 1 will be described. An X-axis, a Y-axis, and a Z-axis shown in FIG. 1 are directional axes orthogonal to each other and constitute a three-dimensional orthogonal coordinate system. In this embodiment, the X-axis and the Y-axis are horizontal directional axes, and the Z-axis is a directional axis of gravity. For example, when simply described as "horizontal direction" in the present embodiment, it means "X-axis direction and Y-axis direction" unless otherwise specified.

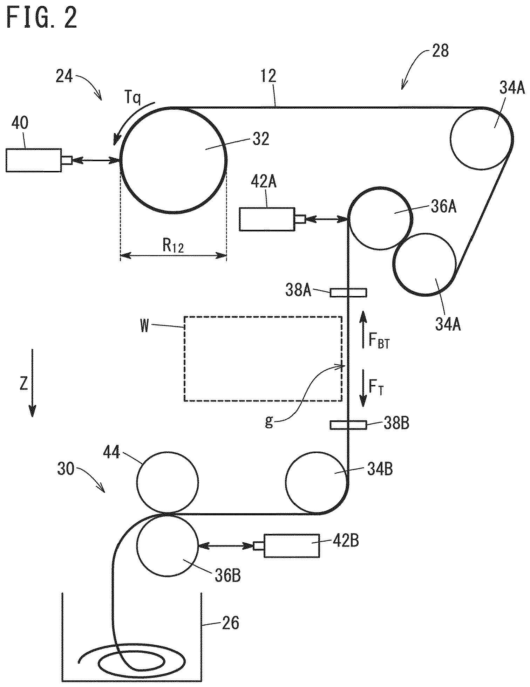

Hereinafter, the wire electrical discharge machine 10 of the present embodiment will be described. The wire electrical discharge machine 10 is an industrial machine that carries out electrical discharge machining on a workpiece W (an object to be machined) by causing electrical discharge at an electrode gap g (FIG. 2) between a wire electrode 12 and the workpiece W. The wire electrical discharge machine 10 of the present embodiment includes a machine main body 14 that performs electrical discharge machining and a control device 16 that controls the machine main body 14. As shown in FIG. 1, the machine main body 14 and the control device 16 are connected to each other.

The wire electrical discharge machine 10 further includes a tension information acquisition device 18 that acquires tension information indicating a tension $F_T$ of the wire electrode 12 in the present embodiment. As shown in FIG. 1, the tension information acquisition device 18 is connected to the control device 16.

In the wire electrical discharge machine 10, the machine main body 14 includes a work pan 20, a table 22, a feed mechanism 24, and a collection box 26. The work pan 20 is a pan in which a working fluid is stored. The working fluid is a dielectric liquid, and although not limited, for example, deionized water is used. The table 22 is a pedestal for supporting a workpiece W inside the work pan 20.

Although not shown, a motor for moving the table 22 in the horizontal direction is connected to the table 22. Thus, the table 22 can move relative to the wire electrode 12 while supporting the workpiece W within the work pan 20.

FIG. 2 is a configuration diagram of the feed mechanism 24.

The feed mechanism 24 is a mechanism that feeds or delivers the wire electrode 12 along a feeding direction, in a manner so that the wire electrode 12 passes through the workpiece W that is supported by the table 22. The feeding direction is a direction in which the wire electrode 12 is fed in a feeding path of the wire electrode 12 to be followed from a wire bobbin 32 to the collection box 26, as described below. As shown in FIG. 2, the feed mechanism 24 has a supply path section 28 on the upstream side of the workpiece W and a collection path section 30 on the downstream side of the workpiece W. The supply path section 28 and the collection path section 30 constitute a part of the feeding path of the wire electrode 12.

Although FIG. 2 shows the wire electrode 12 and the workpiece W as if they are merely adjacent to each other, the wire electrode 12 is passed through a through hole formed in advance in the workpiece W during actual electrical discharge machining, as shown in FIG. 1.

The supply path section 28 is a path section of the feed mechanism 24 that feeds the wire electrode 12 from the wire bobbin 32 toward the workpiece W. The supply path section 28 includes the wire bobbin 32, a plurality of auxiliary rollers 34A, a feed roller 36A, and an upper guide 38A. These are arranged in this order along the feeding path of the wire electrode 12, as shown in FIG. 2. The wire bobbin 32 is a rotatable bobbin around which the wire electrode 12 is wound in a manner so as to be capable of being reeled out therefrom. The feed roller 36A is a rotatable roller around which the wire electrode 12 reeled out from the wire bobbin 32 is wound, and feeds the wire electrode 12 in the feeding direction by rotation. The auxiliary roller 34A is a rotatable roller provided to prevent the wire electrode 12 from sagging or slacking between the wire bobbin 32 and the feed roller 36A. In the configuration illustrated in FIG. 2, two auxiliary rollers 34A are provided, but the number of auxiliary rollers 34A is not limited thereto. In the configuration illustrated in FIG. 2, the wire electrode 12 is held and sandwiched between the auxiliary roller 34A and the feed roller 36A. Thus, it is possible to reduce the possibility that the wire electrode 12 wound on the feed roller 36A may come off the feed roller 36A. The upper guide 38A is a wire guide that guides the wire electrode 12 from the feed roller 36A toward the workpiece W.

Although not shown, a motor for moving the upper guide 38A horizontally is connected to the upper guide 38A. Thus, the upper guide 38A can be moved horizontally. The inclination angle of the wire electrode 12 with respect to the Z-axis between the upper guide 38A, and a lower guide 38B of the collection path section 30 described later can be adjusted by the horizontal movement of the upper guide 38A.

The supply path section 28 further includes a torque motor 40 and a feed motor 42A. These motors are actuators provided in the wire electrical discharge machine 10 to feed the wire electrode 12 while tensioning the wire electrode 12. The torque motor 40 is a motor that generates, on the wire electrode 12, a back tension $F_{BT}$ in a direction opposite to the feeding direction, by controlling the rotational torque Tq applied to the wire bobbin 32 to be constant. By applying the back tension $F_{BT}$ to the wire electrode 12, the possibility of sagging of the wire electrode 12 is reduced. The feed motor 42A, for example, is a servo motor. The feed motor 42A is connected to the feed roller 36A to control the rotation of the feed roller 36A.

The collection path section 30 is a path section of the feed mechanism 24 that feeds the wire electrode 12 from the workpiece W toward the collection box 26. The collection path section 30 includes the lower guide 38B, an auxiliary roller 34B, a feed roller 36B, and a pinch roller 44. These are arranged in this order along the feeding path of the wire electrode 12, as shown in FIG. 2. The lower guide 38B is a wire guide that guides the wire electrode 12 that has passed through the workpiece W, toward the feed roller 36B. The auxiliary roller 34B is a rotatable roller provided to prevent the wire electrode 12 from sagging or slacking between the lower guide 38B and the feed roller 36B. Like the auxiliary rollers 34A, the number of the auxiliary rollers 34B is not limited to the number illustrated in FIG. 2. The feed roller 36B is a rotatable roller on which the wire electrode 12 that has passed through the lower guide 38B is wound, and feeds the wire electrode 12 toward the collection box 26 by rotation. The pinch roller 44 is a rotatable roller that holds and sandwiches the wire electrode 12 cooperatively with the feed roller 36B. By sandwiching the wire electrode 12 between the feed roller 36B and the pinch roller 44 as shown in FIG. 2, the possibility of sagging of the wire electrode 12 is reduced.

Although not shown, a motor for horizontally moving the lower guide 38B is connected also to the lower guide 38B in the same manner as the motor is connected to the upper guide 38A. Thus, the inclination angle of the wire electrode 12 with respect to the Z-axis between the upper guide 38A and the lower guide 38B can be adjusted by horizontally moving the lower guide 38B.

The collection path section 30 further includes a feed motor 42B. The feed motor 42B is one of the actuators provided in the wire electrical discharge machine 10 that serves to feed the wire electrode 12 while tensioning the wire electrode 12. The feed motor 42B, for example, is a servo motor. The feed motor 42B is connected to the feed roller 36B to thereby control the rotation of the feed roller 36B.

The feed mechanism 24 having the above-described configuration can apply the back tension $F_{BT}$ generated by driving of the torque motor 40 and the tension $F_T$ generated by driving of the feed motor 42A and the feed motor 42B, to the wire electrode 12. With these tensile forces, the wire electrode 12 can be stretched between the feed rollers 36A and 36B while being fed in the feeding direction.

The tensioned wire electrode 12 forms an electrode gap g jointly with the workpiece W. When a voltage is applied to the electrode gap g, electrical discharge can be generated. The wire electrical discharge machine 10 machines the workpiece W by using the electrical discharge. In this regard, although not illustrated, the wire electrical discharge machine 10 further includes a power supply for applying a voltage to the electrode gap g.

Next, a description will be given concerning the control device 16. Although not shown, the control device 16 includes a processor and a memory. The processor and the memory of the control device 16 cooperate with each other to control the torque motor 40, the feed motor 42A, and the feed motor 42B and thereby perform feed control for feeding the wire electrode 12 in the feed direction while stretching the wire electrode 12. As will be described in detail later, the feed control according to the present embodiment is performed without using a so-called tension sensor attached to the wire electrode 12.

In addition to the feed control, the control device 16 also performs movement control of the table 22 (relative movement control of the wire electrode 12), control of the power supply that applies a voltage to the electrode gap g (discharge control), and movement control of the upper guide 38A and the lower guide 38B (inclination control of the wire electrode 12). These controls are realized by appropriately controlling the motors connected respectively to the table 22, the upper guide 38A, and the lower guide 38B, and the power supply that applies a voltage to the electrode gap g.

Hereinafter, the feed control will be further described. In the feed control, the control device 16 controls the torque motor 40 in a manner so that a constant rotational torque Tq is applied to the wire bobbin 32. Further, the control device 16 acquires information, which is called an estimated disturbance value $V_D$ in the present embodiment, based on control information of the feed motor 42A. Then, the control device 16 controls the feed motor 42A and the feed motor 42B so as to keep the estimated disturbance value $V_D$ constant.

The estimated disturbance value $V_D$ is numerical information correlated with the magnitude of disturbance (external force) applied to the feed motor 42A. The estimated disturbance value $V_D$ is calculated based on the difference between a drive current based on a command when the feed motor 42A rotates at a speed commanded by the command without being affected by disturbance and a drive current when the feed motor 42A rotates at the commanded speed in the case of being affected by disturbance. For example, it is assumed that the rotation speed of the feed motor 42A deviates from the rotation speed based on the command of the control device 16, due to disturbance. In this case, the control device 16 adjusts the drive current supplied to the feed motor 42A such that the feed motor 42A can rotate at the rotation speed based on the command. The estimated disturbance value $V_D$ of the feed motor 42A can be obtained based on the adjustment amount of the drive current used at this time.

In the present embodiment, disturbances applied to the feed motor 42A are the back tension $F_{BT}$ and the tension $F_T$ generated in the wire electrode 12. In this case, the estimated disturbance value $V_D$ correlates with the resultant force of the back tension $F_{BT}$ and the tension $F_T$, which are applied to the feed motor 42A. Therefore, under the assumption that the back tension $F_{BT}$ generated in the wire electrode 12 is constant, the tension $F_T$ of the wire electrode 12 can be kept constant by keeping the estimated disturbance value $V_D$ constant.

The estimated disturbance value $V_D$ can be kept constant by, for example, appropriately adjusting the rotation speed of the feed motor 42B while rotating the feed motor 42A at a constant speed. Alternatively, the estimated disturbance value $V_D$ can be kept constant by appropriately adjusting an output torque outputted from the feed motor 42A while rotating the feed motor 42B at a constant speed. The control device 16 may perform any one of these controls, for adjusting the estimated disturbance value $V_D$.

However, it is difficult to keep the tension $F_T$ of the wire electrode 12 constant during the actual operation of the wire electrical discharge machine 10, only by the above-described feed control. That is, in the feed control described above, if the back tension $F_{BT}$ is constant, the tension $F_T$ can be made constant by making the estimated disturbance value $V_D$ constant. However, actually, the back tension $F_{BT}$ increases as the feeding of the wire electrode 12 progresses. This is because the back tension $F_{BT}$, the outer diameter $R_{12}$ (see FIG. 2) of the wire electrode 12 wound around the wire bobbin 32, and the rotational torque Tq of the torque motor 40 satisfy the relationship expressed by the following Equation 1. In Equation 1, "a" is a coefficient.

$$[Equation\ 1]$$

$$F_{BT} = a \cdot Tq/R_{12}$$

That is, in the feed control described above, the outer diameter $R_{12}$ gradually decreases as the wire electrode 12 is fed from the wire bobbin 32, but control is performed so as to keep the rotational torque Tq constant, and consequently the back tension $F_{BT}$ gradually increases. Therefore, in the feed control in which the estimated disturbance value $V_D$ representing the resultant force of the back tension $F_{BT}$ and the tension $F_T$ is kept constant, the back tension $F_{BT}$ gradually increases while the tension $F_T$ gradually decreases.

As long as the tension $F_T$ is within the allowable range in which the electrical discharge machining can be suitably performed, then there is no problem even if the decrease of the tension $F_T$ is ignored. However, if the tension $F_T$ decreases so as to deviate from the allowable range, it becomes difficult to feed the wire electrode 12 in the feeding direction while suitably stretching the wire electrode 12.

In light of the above, in order to provide the wire electrical discharge machine 10 that does not require a tension sensor, it is necessary to provide a means for grasping the tension $F_T$, in place of the tension sensor. If such a means is provided, it is possible to appropriately execute control for adjusting the changing tension $F_T$ (tension control of the wire electrode 12) in the wire electrical discharge machine 10. Based on the above, the tension information acquisition device 18 according to the present embodiment will be described below.

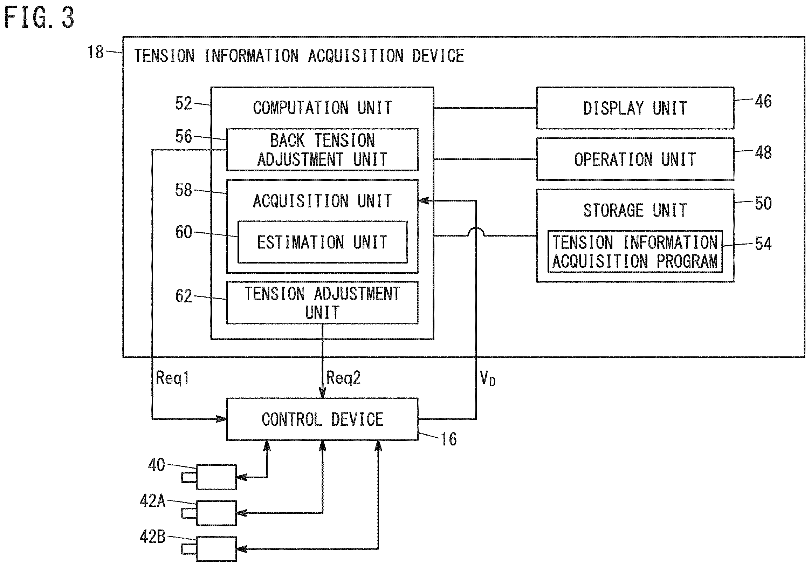

FIG. 3 is a configuration diagram of the tension information acquisition device 18.

The tension information acquisition device 18 is an electronic device (computer) that makes it possible to acquire tension information indicating the tension $F_T$ of the wire electrode 12 based on information obtained from the actuators of the feed mechanism 24, and to control the tension $F_T$ based on the acquired result. The tension information acquisition device 18 includes a display unit 46, an operation unit 48, a storage unit 50, and a computation unit 52.

The display unit 46 is a display device having, for example, a liquid crystal screen. The screen of the display unit 46 is not limited to a liquid crystal screen. For example, the display unit 46 may include a screen of organic EL (OEL: Organic Electro-Luminescence).

The operation unit 48 is configured by, for example, a keyboard, a mouse, or a touch panel provided on the screen of the display unit 46, and is provided to receive information input to the tension information acquisition device 18. Accordingly, the operator can appropriately input his/her instruction to the tension information acquisition device 18.

The storage unit 50 includes, for example, a memory such as a random access memory (RAM) or a read only memory (ROM), and is provided to store information. As shown in FIG. 3, the storage unit 50 stores a tension information acquisition program 54. The tension information acquisition program 54 is a predetermined program that is prepared in advance in order for the tension information acquisition device 18 to execute a tension information acquisition method that enables estimation of the tension $F_T$ of the wire electrode 12 based on information obtained from the actuators of the feed mechanism 24. The tension information acquisition method will be described in detail after a configuration example of the tension information acquisition device 18 has been described.

The computation unit 52 is configured by a processor such as a central processing unit (CPU) or a graphics processing unit (GPU), and is provided to process information by calculation. The computation unit 52 includes a back tension adjustment unit 56 that reduces the magnitude of the back tension $F_{BT}$ to zero by controlling the torque motor 40, and an acquisition unit 58 that acquires tension information indicating the tension $F_T$ based on the estimated disturbance value $V_D$ at that time. The computation unit 52 further includes a tension adjustment unit 62 that controls the feed motor 42A and the feed motor 42B based on the acquired tension information. These units are realized by the computation unit 52 reading and executing the tension information acquisition program 54 in the storage unit 50.

The back tension adjustment unit 56 reduces the back tension $F_{BT}$ of the wire electrode 12 to zero by reducing the rotational torque Tq applied to the wire bobbin 32 by the torque motor 40. The back tension adjustment unit 56 reduces the back tension $F_{BT}$ to zero by, for example, stopping the driving of the torque motor 40. However, the method of reducing the back tension $F_{BT}$ to zero is not limited thereto. For example, reducing the back tension $F_{BT}$ to zero can also be achieved by reducing the output of the torque motor 40 until the component of the back tension $F_{BT}$ is no longer included in the estimated disturbance value $V_D$. Therefore, the back tension adjustment unit 56 may make the back tension $F_{BT}$ zero, for example, by decreasing the output of the torque motor 40 until the decrease amount per unit time of the estimated disturbance value $V_D$ becomes equal to or less than a predetermined threshold value (until the estimated disturbance value $V_D$ bottoms out). In this case, the back tension adjustment unit 56 does not have to necessarily stop the torque motor 40.

The control of the torque motor 40 may be realized by the tension information acquisition device 18 controlling the torque motor 40, in place of the control device 16, or may be indirectly realized by the tension information acquisition device 18 requesting the control device 16 to control the torque motor 40. The present embodiment realizes the control by using the latter. That is, in the present embodiment, the back tension adjustment unit 56 outputs a request Req1 for reducing the output of the torque motor 40, to the control device 16. In response to the request Req1, the control device 16 reduces the rotational torque Tq applied to the wire bobbin 32 by the torque motor 40.

The acquisition unit 58 acquires the estimated disturbance value $V_D$ when the back tension $F_{BT}$ is zero, from the control device 16. Notice of the timing at which the back tension $F_{BT}$ becomes zero may be given to the acquisition unit 58 after the back tension adjustment unit 56 has reduced the output of the torque motor 40. The acquisition unit 58 may acquire the estimated disturbance value $V_D$ after receiving the notice.

As described above, the estimated disturbance value $V_D$ is numerical information correlated with the resultant force of the back tension $F_{BT}$ and the tension $F_T$. In other words, the estimated disturbance value $V_D$ when the back tension $F_{BT}$ is zero is numerical information correlated with the tension $F_T$.

As shown in FIG. 3, the acquisition unit 58 includes an estimation unit 60. The estimating unit 60 estimates the tension $F_T$ of the wire electrode 12 based on the acquired estimated disturbance value $V_D$. By this estimation, the acquisition unit 58 can obtain tension information indicating the tension $F_T$ (an estimated value of the tension $F_T$). The estimation unit 60 can accurately estimate the tension $F_T$ from the estimated disturbance value $V_D$ obtained when the back tension $F_{BT}$ is zero, by calculation based on the correlation between the estimated disturbance value $V_D$ and the tension $F_T$.

The tension adjustment unit 62 controls the feed motor 42A and the feed motor 42B in a manner so that the tension $F_T$ estimated by the estimation unit 60 falls within an allowable range. The tension adjustment unit 62 may control the feed motor 42A and the feed motor 42B, instead of the control device 16, or may indirectly control these motors by requesting the control device 16 to control the feed motor 42A and the feed motor 42B. The present embodiment realizes the control by using the latter. That is, in the present embodiment, the tension adjustment unit 62 outputs a request Req2 for adjusting the tension $F_T$, to the control device 16. Then, in response to the request Req2, the control device 16 performs control (tension control) for adjusting the tension $F_T$.

The control device 16 that has received the request Req2 may realize the tension control by controlling the feed motor 42A and the feed motor 42B while referring to the estimated tension $F_T$. At this time, the tension information acquisition device 18 estimates the tension $F_T$ as needed and appropriately notifies the control device 16 of the estimation result, thereby causing the control device 16 to perform tension control with high accuracy. The tension control in this case is different from a conventional control method, which is performed by referring to the tension $F_T$ detected by the tension sensor, in that the tension $F_T$ is estimated by the tension information acquisition device 18, but can be executed by a control procedure similar to the conventional control method.

In the present embodiment, it is also possible to perform tension control based on the estimated disturbance value $V_D$, instead of the tension $F_T$. That is, a range within which the estimated disturbance value $V_D$ when the back tension $F_{BT}$ is zero should fall is determined in accordance with the allowable range within which the tension $F_T$ should fall. In this case, if the control device 16 controls the feed motor 42A and the feed motor 42B such that the estimated disturbance value $V_D$ when the back tension $F_{BT}$ is zero falls within the range, the tension $F_T$ can consequently fall within the allowable range. In this case, since the estimated disturbance value $V_D$ may be directly (i.e., without change) used as the tension information without estimating the tension $F_T$, the estimation unit 60 may be omitted from the configuration of the tension information acquisition device 18. The method of adjusting the estimated disturbance value $V_D$ is as described above in the description of the feed control of the present embodiment, and therefore will not be described again here.

The above is an example of the configuration of the tension information acquisition device 18 according to the present embodiment. According to the tension information acquisition device 18, tension information indicating the tension $F_T$ of the wire electrode 12 can be acquired without using a so-called tension sensor. Furthermore, according to the tension information acquisition device 18 of the present embodiment including the tension adjustment unit 62, the tension $F_T$ of the wire electrode 12 can be suitably and easily adjusted based on the acquired tension information.

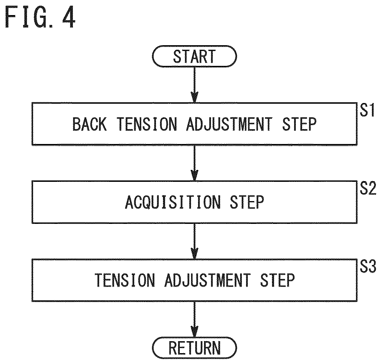

FIG. 4 is a flowchart illustrating a process flow of a tension information acquisition method according to an embodiment.

Hereinafter, a tension information acquisition method executed by the tension information acquisition device 18 will be described. As shown in FIG. 4, the tension information acquisition method includes a back tension adjustment step S1, an acquisition step S2, and a tension adjustment step S3 in this order. Hereinafter, descriptions will be given concerning each of these steps.

The back tension adjustment step S1 is a step of reducing the rotational torque Tq of the torque motor 40 until the magnitude of the back tension $F_{BT}$ of the wire electrode 12 becomes zero. The back tension adjustment step S1 is executed by the back tension adjustment unit 56.

Since the back tension $F_{BT}$ of the wire electrode 12 is made to be zero in the tension information acquisition method as described above, it is desirable that the tension information acquisition method be executed in a state where electrical discharge machining is not being performed (in a state prior to the machining or in an interrupted state).

The acquisition step S2 is a step of acquiring tension information indicating the tension $F_T$ based on the estimated disturbance value $V_D$ of the feed motor 42A obtained when the back tension $F_{BT}$ is zero. The acquisition step S2 is executed by the acquisition unit 58. The tension information can be acquired as an estimated value of the tension $F_T$ converted from the estimated disturbance value $V_D$. However, the tension information is not limited to this. For example, the acquired estimated disturbance value $V_D$ may also be used as the tension information as it is.

The tension adjustment step S3 is a step of adjusting the tension $F_T$ of the wire electrode 12 by controlling the feed motor 42A and the feed motor 42B based on the tension information acquired in the acquisition step S2. The tension adjustment step S3 is executed by the tension adjustment unit 62. The tension $F_T$ of the wire electrode 12 can be suitably adjusted by performing the tension adjustment step S3.

The above is an example of the configuration of the tension information acquisition method according to the present embodiment. When the electrical discharge machining is performed after the tension $F_T$ has been adjusted by the execution of the tension adjustment step S3, the output of the torque motor 40 may be returned to the level before the execution of the back tension adjustment step S1. Thereafter, electrical discharge machining may be executed while performing the above-described feed control based on the estimated disturbance value $V_D$ (the resultant force of the adjusted tension $F_T$ and the back tension $F_{BT}$) immediately after the output of the torque motor 40 has been returned.

As described above, according to the present embodiment, it is possible to provide the tension information acquisition device 18, the wire electrical discharge machine 10, and the tension information acquisition method that make it possible to acquire the tension information indicating the tension $F_T$ of the wire electrode 12 based on the information obtained from the actuators for feeding the wire electrode 12.

The wire electrical discharge machine 10 including the tension information acquisition device 18 does not require any tension sensor to be attached to the wire electrode 12, and thus it is advantageous for simplification of the mechanical structure and for cost reduction of components. In addition, since the wire electrical discharge machine 10 including the tension information acquisition device 18 does not need the work of attaching the tension sensor to the wire electrode 12, the wire electrical discharge machine 10 is also advantageous for, for example, a reduction in the number of work steps of the operator.

[Modifications]

The embodiment has been described above as one example of the present invention. It is noted that various modifications or improvements are capable of being added to the above-described embodiment. Further, it is clear from the scope of the claims that other modes to which such modifications or improvements have been added can be included within the technical scope of the present invention.

Hereinafter, some modified examples according to the embodiment will be specifically described. However, in the following description, elements already described in the embodiment are denoted by the same names and the same reference numerals, and description thereof is appropriately omitted.

(Modification 1)

In the embodiment, the magnitude of the back tension $F_{BT}$ is reduced to zero by the back tension adjustment unit 56. When the back tension $F_{BT}$ becomes smaller, sagging or slacking of the wire electrode 12 occurs more easily between the wire bobbin 32 and the feed roller 36A. If sagging or slacking of the wire electrode 12 occurs between the wire bobbin 32 and the feed roller 36A, problems arise that the wire electrode 12 is likely to come off the auxiliary roller 34A or the feed roller 36A. In light of this, the present modified examples will be described below.

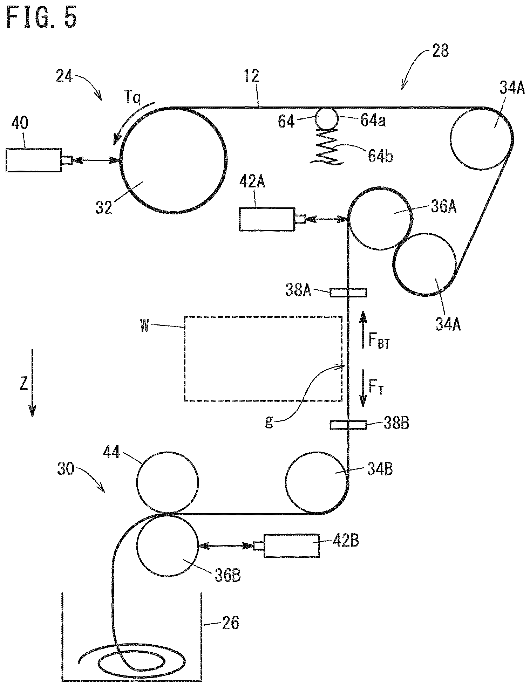

FIG. 5 is a configuration diagram of a feed mechanism 24 according to a first modification.

The wire electrical discharge machine 10 may further include a cushion roller 64 as shown in FIG. 5. The cushion roller 64 includes a roller portion 64a and a cushion portion 64b. The roller portion 64a is a rotatable roller that is in contact with the wire electrode 12 between the wire bobbin 32 and the feed roller 36A. The cushion portion 64b is an elastic member that supports the roller portion 64a, and is fixed to the machine main body 14. In FIG. 5, the cushion portion 64b is illustrated as a spring member, but is not limited thereto.

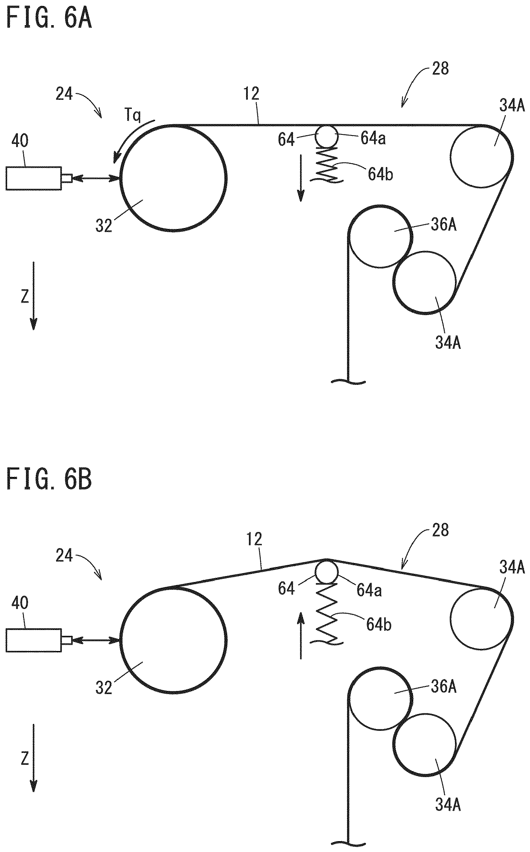

FIG. 6A is a diagram schematically illustrating the wire electrode 12 and the cushion roller 64 when the magnitude of the back tension $F_{BT}$ is not zero.

As shown in FIG. 6A, when the magnitude of the back tension $F_{BT}$ is not zero (at least when a constant rotational torque Tq is applied to the wire bobbin 32 by the torque motor 40), the cushion portion 64b is compressed by being pressed by the wire electrode 12. Since the roller portion 64a is rotatable, feeding of the wire electrode 12 is not hindered by the cushion roller 64 (see FIG. 6A).

FIG. 6B is a diagram schematically illustrating the wire electrode 12 and the cushion roller 64 when the magnitude of the back tension $F_{BT}$ is zero.

As shown in FIG. 6B, when the magnitude of the back tension $F_{BT}$ is zero (or approaches zero), the force that the wire electrode 12 applies to the cushion roller 64 is weakened, so that the cushion portion 64b stretches and presses the wire electrode 12. Thus, the length of the feeding path (the path length) of the wire electrode 12 is extended between the wire bobbin 32 and the feed roller 36A. Since the roller portion 64a is rotatable, the feeding of the wire electrode 12 is not hindered, as in the case of FIG. 6A.

As described above, in the present modification, the presence of the cushion roller 64 increases the path length of the wire electrode 12 between the wire bobbin 32 and the feed roller 36A at least while the back tension $F_{BT}$ is zero. As a result, while the back tension $F_{BT}$ is zero, the wire electrode 12 is less likely to sag or slack between the wire bobbin 32 and the feed roller 36A. Since the wire electrode 12 is less likely to sag or slack, it is possible to reduce the possibility that the wire electrode 12 comes off the auxiliary roller 34A or the feed roller 36A.

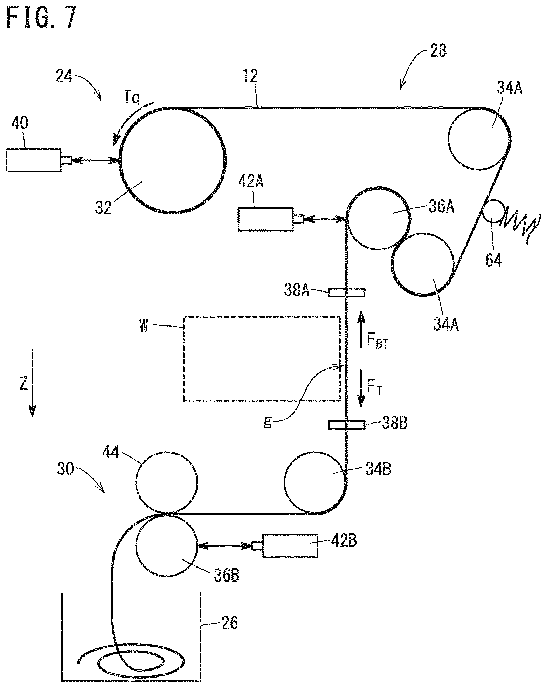

FIG. 7 shows an example in which the arrangement of the cushion roller 64 shown in FIG. 5 is changed.

The position at which the cushion roller 64 is disposed is not limited to the position shown in FIG. 5 as long as the path length of the wire electrode 12 can be extended between the wire bobbin 32 and the feed roller 36A. For example, the cushion roller 64 may be disposed at a position shown in FIG. 7.

(Modification 2)

As described in the embodiment, the estimated disturbance value $V_D$ of the feed motor 42A is adjusted by controlling the output torque outputted from the feed motor 42A. That is, the estimated disturbance value $V_D$ of the feed motor 42A is correlated with the output torque from the feed motor 42A.

Therefore, the tension information acquisition device 18 may estimate the tension $F_T$ of the wire electrode 12 based on the output torque outputted from the feed motor 42A when the back tension $F_{BT}$ is zero. That is, in execution of the acquisition step S2, the acquisition unit 58 of the tension information acquisition device 18 may acquire the output torque outputted from the feed motor 42A when the back tension $F_{BT}$ is zero. Alternatively, the estimation unit 60 may estimate the tension $F_T$ of the wire electrode 12 based on the output torque of the feed motor 42A when the back tension $F_{BT}$ is zero.

(Modification 3)

The estimated disturbance value $V_D$ of the feed motor 42A is adjusted by controlling the rotation of the feed roller 36A. That is, the tension $F_T$ of the wire electrode 12 changes in accordance with the rotation state of the feed roller 36A. Based on this, the present modification will be described below.

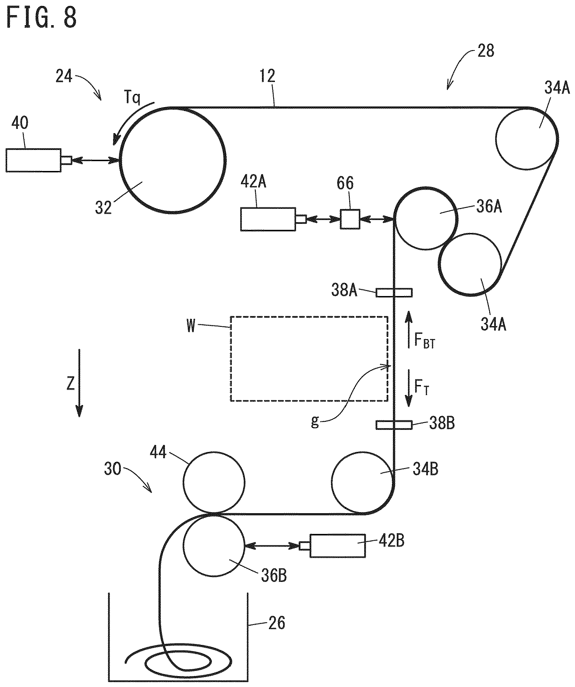

FIG. 8 is a configuration diagram of a feed mechanism 24 according to a third modification.

The feed mechanism 24 of the present modification further includes a powder brake 66 provided between the feed motor 42A and the feed roller 36A. The powder brake 66 brakes the rotation of the feed roller 36A by reducing the rotational torque applied from the feed motor 42A to the feed roller 36A.

In a case where the powder brake 66 that brakes the rotation of the feed roller 36A is provided, the tension adjustment unit 62 of the tension information acquisition device 18 may control the powder brake 66 in the tension adjustment step S3. That is, in the case of the present modification, the tension adjustment unit 62 controls the powder brake 66 in addition to the feed motor 42A to adjust the rotational state of the feed roller 36A and thus the tension $F_T$ of the wire electrode 12. It should be noted that the control of the powder brake 66 by the tension adjustment unit 62 includes a case where the tension adjustment unit 62 causes the control device 16 to control the powder brake 66.

(Modification 4)

In the embodiment, the tension information acquisition device 18 has been described as an electronic device different from the control device 16 of the wire electrical discharge machine 10. The tension information acquisition device 18 is not limited thereto. The tension information acquisition device 18 and the control device 16 may be configured as one electronic device. For example, the control device 16 also serving as the tension information acquisition device 18 may be configured by applying the constituent elements of the tension information acquisition device 18 to the control device 16.

With this configuration, the control device 16 of the wire electrical discharge machine 10 is provided which is capable of acquiring the tension information indicating the tension $F_T$ of the wire electrode 12 on the basis of the information obtained from the actuators for feeding the wire electrode 12.

[Invention Obtained from Embodiment]

The inventions that can be grasped from the above-described embodiment and the modifications thereof will be described below.

<First Invention>

The tension information acquisition device (18) configured to acquire tension information indicating the tension ($F_T$) of the wire electrode (12) of the wire electrical discharge machine (10) is provided. The wire electrical discharge machine (10) includes: the wire bobbin (32) around which the wire electrode (12) is wound; the feed roller (36A) configured to feed the wire electrode (12) reeled out from the wire bobbin (32), in the feeding direction by rotation of the feed roller; the feed motor (42A) configured to control the rotation of the feed roller (36A); and the torque motor (40) configured to generate, on the wire electrode (12), the back tension ($F_{BT}$) in a direction opposite to the feeding direction by controlling the rotational torque (Tq) applied to the wire bobbin (32). The tension information acquisition device (18) includes: the back tension adjustment unit (56) configured to control the torque motor (40) to thereby reduce the rotational torque (Tq) until the magnitude of the back tension ($F_{BT}$) of the wire electrode (12) becomes zero; and the acquisition unit (58) configured to acquire the tension information indicating the tension ($F_T$) of the wire electrode (12), based on the estimated disturbance value ($V_D$) of the feed motor (42A) or the output torque thereof, obtained when the magnitude of the back tension ($F_{BT}$) is zero.

This provides the tension information acquisition device (18) capable of acquiring the tension information indicating the tension ($F_T$) of the wire electrode (12) based on the information obtained from the actuators for feeding the wire electrode (12).

The acquisition unit (58) may include the estimation unit (60) configured to estimate the tension ($F_T$) of the wire electrode (12) based on the estimated disturbance value ($V_D$) or the output torque, obtained when the magnitude of the back tension ($F_{BT}$) is zero, and the estimated tension ($F_T$) is used as the tension information. As a result, the tension control can be executed in the same manner as in the conventional technique which is performed while referring to the tension ($F_T$) detected by the tension sensor.

The tension information acquisition device (18) may further include the tension adjustment unit (62) configured to adjust the tension ($F_T$) of the wire electrode (12) by controlling the feed motor (42A) based on the tension information. This makes it possible to suitably adjust the tension ($F_T$) of the wire electrode (12).

The feed roller (36A) may be provided on an upstream side of a workpiece (W) in the feeding path of the wire electrode (12), the wire electrical discharge machine (10) may further include the powder brake (66) configured to brake the rotation of the feed roller (36A), and the tension information acquisition device (18) may further include the tension adjustment unit (62) configured to adjust the tension ($F_T$) of the wire electrode (12) by controlling the powder brake (66) based on the tension information. This makes it possible to suitably adjust the tension ($F_T$) of the wire electrode (12).

<Second Invention>

The wire electrical discharge machine (10) includes the tension information acquisition device (18) according to the first invention.

With this configuration, it is possible to provide the wire electrical discharge machine (10) capable of acquiring the tension information indicating the tension ($F_T$) of the wire electrode (12) based on the information obtained from the actuators for feeding the wire electrode (12).

The wire electrical discharge machine (10) may further include the cushion roller (64) configured to extend the length of the feeding path of the wire electrode (12) by pressing the wire electrode (12) between the wire bobbin (32) and the feed roller (36A) at least while the magnitude of the back tension ($F_{BT}$) is zero. Thus, it is possible to reduce concern that the wire electrode (12) may sag or slack between the wire bobbin (32) and the feed roller (36A) while the back tension ($F_{BT}$) is zero.

<Third Invention>

The tension information acquisition method for acquiring tension information indicating the tension ($F_T$) of the wire electrode (12) of the wire electrical discharge machine (10) is provided. The wire electrical discharge machine (10) includes: the wire bobbin (32) around which the wire electrode (12) is wound; the feed roller (36A) configured to feed the wire electrode (12) reeled out from the wire bobbin (32), in the feeding direction by rotation of the feed roller; the feed motor (42A) configured to control the rotation of the feed roller (36A); and the torque motor (40) configured to generate, on the wire electrode (12), the back tension ($F_{BT}$) in a direction opposite to the feeding direction by controlling the rotational torque (Tq) applied to the wire bobbin (32). The tension information acquisition method includes: the back tension adjustment step (S1) of reducing the rotational torque (Tq) of the torque motor (40) until the magnitude of the back tension ($F_{BT}$) of the wire electrode (12) becomes zero; and the acquisition step (S2) of acquiring the tension information indicating the tension ($F_T$) of the wire electrode (12), based on the estimated disturbance value ($V_D$) of the feed motor (42A) or the output torque thereof, obtained when the magnitude of the back tension ($F_{BT}$) is zero.

Thus, it is possible to provide the tension information acquisition method that enables acquisition of tension information indicating the tension ($F_T$) of the wire electrode (12) based on information obtained from the actuators for feeding the wire electrode (12).

In the acquisition step (S2), the tension ($F_T$) of the wire electrode (12) may be estimated based on the estimated disturbance value ($V_D$) or the output torque, obtained when the magnitude of the back tension ($F_{BT}$) is zero, and the estimated tension ($F_T$) is acquired as the tension information. As a result, the tension control can be executed in the same manner as in the conventional technique which is performed while referring to the tension ($F_T$) detected by the tension sensor.

The tension information acquisition method may further include the tension adjustment step (S3) of adjusting the tension ($F_T$) of the wire electrode (12) by controlling the feed motor (42A) based on the tension information. This makes it possible to suitably adjust the tension ($F_T$) of the wire electrode (12).

The feed roller (36A) may be provided on an upstream side of the workpiece (W) in the feeding path of the wire electrode (12), the wire electrical discharge machine (10) may further include the powder brake (66) that is provided between the feed roller (36A) and the feed motor (42A) to brake the rotation of the feed roller (36A), and the tension information acquisition method may further include the tension adjustment step (S3) of adjusting the tension ($F_T$) of the wire electrode (12) by controlling the powder brake (66) based on the tension information. This makes it possible to suitably adjust the tension ($F_T$) of the wire electrode (12).

**Claims**

1. A tension information acquisition device (18) configured to acquire tension information indicating a tension ($F_T$) of a wire electrode (12) of a wire electrical discharge machine (10),

   wherein the wire electrical discharge machine includes: a wire bobbin (32) around which the wire electrode is wound; a feed roller (36A) configured to feed the wire electrode reeled out from the wire bobbin, in a feeding direction by rotation of the feed roller; a feed motor (42A) configured to control the rotation of the feed roller; and a torque motor (40) configured to generate, on the wire electrode, a back tension ($F_{BT}$) in a direction opposite to the feeding direction by controlling a rotational torque (Tq) applied to the wire bobbin,
   the tension information acquisition device comprising:

   a back tension adjustment unit (56) configured to control the torque motor to thereby reduce the rotational torque until a magnitude of the back tension of the wire electrode becomes zero; and
   an acquisition unit (58) configured to acquire the tension information indicating the tension of the wire electrode, based on an estimated disturbance value ($V_D$) of the feed motor or an output torque thereof, obtained when the magnitude of the back tension is zero.

2. The tension information acquisition device according to claim 1, wherein
   the acquisition unit includes an estimation unit (60) configured to estimate the tension of the wire electrode based on the estimated disturbance value or the output torque, obtained when the magnitude of the back tension is zero, and the estimated tension is used as the tension information.

3. The tension information acquisition device according to claim 1 or 2, further comprising:
   a tension adjustment unit (62) configured to adjust the tension of the wire electrode by controlling the feed motor based on the tension information.

4. The tension information acquisition device according to claim 1 or 2, wherein

   the feed roller is provided on an upstream side of a workpiece (W) in a feeding path of the wire electrode,
   the wire electrical discharge machine further includes a powder brake (66) configured to brake the rotation of the feed roller, and
   the tension information acquisition device further comprises a tension adjustment unit (62) configured to adjust the tension of the wire electrode by controlling the powder brake based on the tension information.

5. A wire electrical discharge machine comprising the tension information acquisition device according to any one of claims 1 to 4.

6. The wire electrical discharge machine according to claim 5, further comprising:

a cushion roller (64) configured to extend a length of a feeding path of the wire electrode by pressing the wire electrode between the wire bobbin and the feed roller at least while the magnitude of the back tension is zero.

**7.** A tension information acquisition method for acquiring tension information indicating a tension ($F_T$) of a wire electrode (12) of a wire electrical discharge machine (10),

wherein the wire electrical discharge machine includes: a wire bobbin (32) around which the wire electrode is wound; a feed roller (36A) configured to feed the wire electrode reeled out from the wire bobbin, in a feeding direction by rotation of the feed roller; a feed motor (42A) configured to control the rotation of the feed roller; and a torque motor configured to generate, on the wire electrode, a back tension ($F_{BT}$) in a direction opposite to the feeding direction by controlling a rotational torque (Tq) applied to the wire bobbin, the tension information acquisition method comprising:

a back tension adjustment step (S1) of reducing the rotational torque of the torque motor until a magnitude of the back tension of the wire electrode becomes zero; and an acquisition step (S2) of acquiring the tension information indicating the tension of the wire electrode, based on an estimated disturbance value ($V_D$) of the feed motor or an output torque thereof, obtained when the magnitude of the back tension is zero.

**8.** The tension information acquisition method according to claim 7, wherein in the acquisition step, the tension of the wire electrode is estimated based on the estimated disturbance value or the output torque, obtained when the magnitude of the back tension is zero, and the estimated tension is acquired as the tension information.

**9.** The tension information acquisition method according to claim 7 or 8, further comprising: a tension adjustment step (S3) of adjusting the tension of the wire electrode by controlling the feed motor based on the tension information.

**10.** The tension information acquisition method according to claim 7 or 8, wherein

the feed roller is provided on an upstream side of a workpiece (W) in a feeding path of the wire electrode,

the wire electrical discharge machine further includes a powder brake (66) that is provided between the feed roller and the feed motor to brake the rotation of the feed roller, and
the tension information acquisition method further comprises a tension adjustment step (S3) of adjusting the tension of the wire electrode by controlling the powder brake based on the tension information.

FIG. 1

EP 4 180 159 A1

# FIG. 2

FIG. 3

TENSION INFORMATION ACQUISITION DEVICE

18

52 — COMPUTATION UNIT

56 — BACK TENSION ADJUSTMENT UNIT

58 — ACQUISITION UNIT

60 — ESTIMATION UNIT

62 — TENSION ADJUSTMENT UNIT

46 — DISPLAY UNIT

48 — OPERATION UNIT

50 — STORAGE UNIT

54 — TENSION INFORMATION ACQUISITION PROGRAM

Req1    Req2    $V_D$

CONTROL DEVICE    16

40

42A

42B

EP 4 180 159 A1

**EP 4 180 159 A1**

FIG. 4

```
                    ( START )
                        |
                        v
  +-------------------------------------------+  S1
  |      BACK TENSION ADJUSTMENT STEP         |
  +-------------------------------------------+
                        |
                        v
  +-------------------------------------------+  S2
  |            ACQUISITION STEP               |
  +-------------------------------------------+
                        |
                        v
  +-------------------------------------------+  S3
  |          TENSION ADJUSTMENT STEP          |
  +-------------------------------------------+
                        |
                        v
                    ( RETURN )
```

15

# FIG. 5

FIG. 6A

FIG. 6B

# FIG. 7

# FIG. 8

## INTERNATIONAL SEARCH REPORT

International application No.

**PCT/JP2021/025787**

### A. CLASSIFICATION OF SUBJECT MATTER

**B23H 7/10**(2006.01)i; **B23H 7/02**(2006.01)i
FI: B23H7/10 D; B23H7/02 R

According to International Patent Classification (IPC) or to both national classification and IPC

### B. FIELDS SEARCHED

Minimum documentation searched (classification system followed by classification symbols)

B23H7/10; B23H7/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-77438 A (SODICK CO., LTD.) 23 March 1999 (1999-03-23) paragraphs [0002], [0004], [0017], [0020], [0025]-[0027], [0029], fig. 1, 4 | 1-5, 7-10 |
| A | paragraphs [0002], [0004], [0017], [0020], [0025]-[0027], [0029], fig. 1, 4 | 6 |
| A | WO 2014/068679 A1 (MITSUBISHI ELECTRIC CORP.) 08 May 2014 (2014-05-08) paragraph [0022] | 1-10 |
| A | JP 2003-266247 A (MITSUBISHI ELECTRIC CORP.) 24 September 2003 (2003-09-24) paragraph [0037] | 1-10 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 September 2021** | **28 September 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/025787**

| Patent document cited in search report | | | Publication date (day/month/year) | Patent family member(s) | | | Publication date (day/month/year) |
|---|---|---|---|---|---|---|---|
| JP | 11-77438 | A | 23 March 1999 | (Family: none) | | | |
| WO | 2014/068679 | A1 | 08 May 2014 | US paragraph [0030] | 2015/0290733 | A1 | |
| | | | | CN | 104768689 | A | |
| JP | 2003-266247 | A | 24 September 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002340711 A